Europäisches Patentamt

European Patent Office

Office européen des brevets

(11) Veröffentlichungsnummer: **0 177 815**
**A2**

(12) **EUROPÄISCHE PATENTANMELDUNG**

(21) Anmeldenummer: 85111885.1

(51) Int. Cl.⁴: **G 02 B 7/00**

(22) Anmeldetag: **20.09.85**

(30) Priorität: **06.10.84 DE 8429460 U**

(71) Anmelder: **DR.-ING. RUDOLF HELL GmbH, Grenzstrasse 1-5, D-2300 Kiel 14 (DE)**

(43) Veröffentlichungstag der Anmeldung: **16.04.86 Patentblatt 86/16**

(84) Benannte Vertragsstaaten: **BE CH DE FR GB IT LI NL**

(72) Erfinder: **Rebetge, Lutz, Starnbergerstrasse 73 a, D-2300 Kiel 14 (DE)**

(54) **Vorrichtung zum Justieren optischer Bauelemente.**

(57) Die Erfindung betrifft eine Vorrichtung zum genauen Justieren optischer Bauelemente in zwei zueinander senkrechten translatorischen Justierbewegungen und um zwei Achsen. Die Justierbewegungen erfolgen spielfrei und unabhängig voneinander. Die Verstellung erfolgt mittels Stellschrauben über Gewinde, Ziehkeile und Konen. Die Spielfreiheit wird durch Federn bewirkt. Die Verstellorgane sind alle von einer Seite der Vorrichtung her zu betätigen. Außerdem ist die Vorrichtung raumsparend aufgebaut und eignet sich daher besonders zum nachträglichen Einbau in bereits bestehende optische Anordnungen.

Beschreibung

Vorrichtung zum Justieren optischer Bauelemente

Technisches Gebiet

Die Erfindung betrifft eine Vorrichtung zum Justieren von optischen Bauelementen wie Linsen, Blenden, Prismen, Filtern, Lichtleitern, Lichtmodulatoren, Strahlteiler und dergleichen in vorgegebenen Strahlengängen von optischen Meßeinrichtungen, Scannern, Bildaufzeichnungsgeräten oder ähnlichen Apparaten.

Stand der Technik

In optischen Geräten der o. a. Art ist es oft erforderlich, optische Bauelemente an genau definierten Orten eines vorgegebenen Strahlenganges zu plazieren. Häufig entsteht auch das Problem – etwa bei Weiterentwicklungen oder Modifikationen – nachträglich noch Bauelemente in den Strahlengang einer bereits bestehenden Konstruktion einzufügen. Dabei müssen meist Exemplarstreuungen der einzufügenden Bauelemente durch geeignete Justiereinrichtungen kompensiert werden.

Offenbarung der Erfindung

Die im Schutzanspruch 1 angegebene Erfindung hat es sich zur Aufgabe gemacht, eine Einstellvorrichtung anzugeben, die eine Reihe von praxisnahen Forderungen erfüllt:

1. Das auf einer Plattform befestigte Bauelement ist in zwei rechtwinklig zueinanderstehenden Richtungen translatorisch bewegbar, wobei die Bewegungsrichtungen in einer Ebene erfolgen, die vorzugsweise normal zur optischen Achse der Gesamtanordnung liegt.

2. Das Bauelement ist um zwei Achsen justierbar, wovon eine vorzugsweise die optische Achse des Gesamtsystems ist.

3. Alle Justierbewegungen sind feinfühlig, spielfrei und unabhängig voneinander durchführbar.

4. Die Vorrichtung ist raumsparend aufgebaut.

5. Alle Verstellorgane sind selbsthemmend und sind von einer Seite der Vorrichtung her bedienbar.

Kurze Beschreibung der Zeichnungen

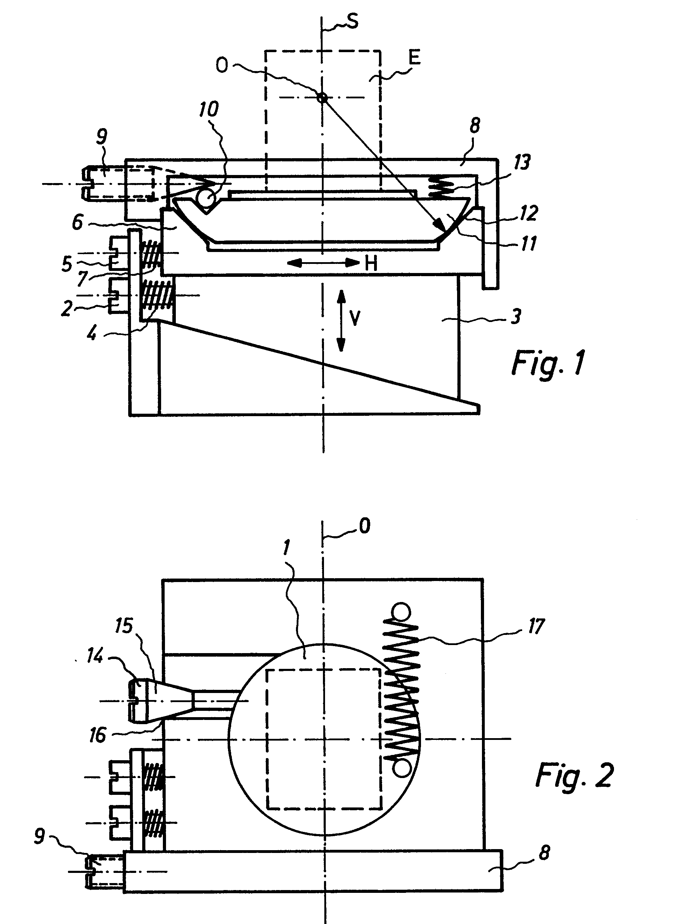

Die Erfindung wird im folgenden anhand der Figuren 1 und 2 näher erläutert.

Es zeigen:

Figur 1    Einstellvorrichtung in der Vorderansicht
Figur 1    Einstellvorrichtung in der Draufsicht

Bester Weg zur Ausführung der Erfindung

Wie in Figur 1 und 2 dargestellt, ist das zu justierende Bauelement E, hier nur durch gestrichelten Umriß angedeutet, auf einer Montageplatteform 1 befestigt. Durch Betätigen der Schraube 2 verschiebt sich der Keil 3 zwischen seinen Führungsflächen und bewirkt eine Höhenverstellung in Richtung des Pfeiles V. Eine Feder 4 sorgt für einseitige Flankenanlage des Gewindes der Schraube 2 und somit für Spielfreiheit. Die Schraube 5 bewirkt im im Zusammenspiel mit der nicht näher beschriebenen horizontalen Prismenführung des Teils 6 und der Feder 7 eine Verstellung in Richtung des Pfeiles H.

Die Drehung um die Achse O, die vorzugsweise die optische Achse des Gesamtsystems ist, wird dadurch bewirkt, daß eine in einer Brücke 8 gelagerte Schraube 9 mit ihrem konischen Ansatz über ein Druckstück 10 auf ein zylindrisch geformtes Schwenkteil 11 drückt, das sich dadurch in einer prismatischen Führung 12 im Teil 6 dreht. Eine Druckfeder 13 sorgt hier für Spielfreiheit.

Die Drehung um die senkrechte Achse S wird durch die in Figur 2 sichtbare Anordnung bewirkt. Im Schwenkteil 11 ist die zylindrische Montageplattform 1 um die Achse S drehbar gelagert. Eine Schraube 14 wird mit ihrem konischen Ansatz 15 an der Kante 16 des Teils 11 durch den Zug einer tangential am Teil 1 angreifenden Feder 17 zur Anlage gezwungen. Drehen der Schraube 14 bewirkt somit feinfühlige Drehung der Plattform 1 um Achse S.

Federkräfte, Gewindesteigungen und Steigung der konischen Ansätze sind so aufeinander abgestimmt, daß alle Verstellbewegungen feinfühlig genug erfolgen können und daß in jedem Falle Selbsthemmung gewährleistet ist. Aus den Figuren geht ebenfalls hervor, daß die Verstellorgane alle von einer Seite der Vorrichtung her bedienbar sind. Ebenso wird ersichtlich, daß die Justierbewegungen unabhängig voneinander erfolgen.

Die Anwendung der Vorrichtung beschränkt sich nicht auf die Justage optischer Bauelemente allein, sondern kann überall dort Verwendung finden, wo ähnliche Justagebedingungen erforderlich sind.

Gegenstand der Erfindung

Patentanspruch

1. Einstellvorrichtung zum Justieren eines optischen Bauelementes, wobei unabhängig voneinander translatorische Bewegungen in zwei Richtungen und Drehbewegungen um 2 Achsen spielfrei ausgeführt werden können, dadurch gekennzeichnet, daß

a) das zu justierende Teil auf einer Montageplattform 1 befestigt ist,

b) Mittel vorhanden sind, die Montageplattform in bezug auf die Grundfläche der Vorrichtung in vertikale Richtung zu verstellen,

c) Mittel vorhanden sind, die Montageplattform in horizontaler Richtung zu verstellen

d) Mittel vorhanden sind, die Montageplattform um eine senkrechte Achse S zu drehen,

e) Mittel vorhanden sind, die Montageplattform um eine waagerecht liegende Achse zu drehen, wobei diese Achse vorzugsweise die optische Achse eines Gesamtsystems ist,

f) die Verstellmittel so gestaltet sind, daß die Bewegungen unabhängig voneinander und spielfrei ausgeführt werden können,

g) sämtliche Verstellmittel von einer Seite der Vorrichtung her zugänglich sind.

0177815

Fig. 1

Fig. 2